**Europäisches Patentamt**

**European Patent Office**

**Office européen des brevets**

(19)

(11) Veröffentlichungsnummer : **0 331 681 B1**

(12) # EUROPÄISCHE PATENTSCHRIFT

(45) Veröffentlichungstag der Patentschrift :
**15.05.91 Patentblatt 91/20**

(51) Int. Cl.$^5$ : **F23C 11/02, F23J 3/04, F22B 31/00, B01D 45/08**

(21) Anmeldenummer : **87907600.8**

(22) Anmeldetag : **25.11.87**

(86) Internationale Anmeldenummer :
**PCT/EP87/00729**

(87) Internationale Veröffentlichungsnummer :
**WO 88/04010 02.06.88 Gazette 88/12**

(54) **Vorrichtung zur Verbannung in einem Wirbelschichtreaktor.**

(30) Priorität : **26.11.86 DE 3640377**

(43) Veröffentlichungstag der Anmeldung :
**13.09.89 Patentblatt 89/37**

(45) Bekanntmachung des Hinweises auf die
Patenterteilung :
**15.05.91 Patentblatt 91/20**

(84) Benannte Vertragsstaaten :
**AT BE CH DE FR GB IT LI LU NL SE**

(56) Entgegenhaltungen :
**EP-A- 0 162 748
WO-A-83/03294
DE-C- 358 014
DE-C- 493 677
FR-A- 2 564 747
GB-A- 2 046 886
GB-A- 2 121 311
US-A- 3 882 798
PatentAbstracts of Japan, volume 6,
No.20(M-110)(898) 5 February 1982**

(73) Patentinhaber : **L. & C. Steinmüller GmbH
Postfach 10 08 55/10 08 65 Fabrikstrasse 1
W-5270 Gummersbach 1 (DE)**

(72) Erfinder : **EICKVONDER, Wolfgang
Breunfeld
W-5223 Nümbrecht (DE)**
Erfinder : **PASSMANN, Norbert
Borkeshof
W-5305 Alfter-Heidgen (DE)**
Erfinder : **THOMAS, Gerhard
Vollmerhauser Str. 15
W-5270 Gummersbach 31 (DE)**
Erfinder : **TUMMERS, Peter
Am Stockweg 5
W-5270 Gummersbach 21 (DE)**
Erfinder : **STEVEN, Hubert
Schürweg 8
W-5270 Gummersbach 1 (DE)**

(74) Vertreter : **Carstens, Wilhelm, Dipl.-Phys.
L. & C. Steinmüller GmbH Patentabteilung
Postfach 10 08 55/10 08 65
W-5270 Gummersbach 1 (DE)**

## Beschreibung

Die Erfindung betrifft eine Vorrichtung zur Verbrennung von kohlenstoffhaltigen Materialien in einem Wirbelschichtreaktor mit einem unteren Bereich und einem oberen Bereich, mit Wandkühlflächen und mit einem Rückführsystem, einschließlich mindestens eines aus versetzt angeordnetem Abscheidebalken von im wesentlichen U-förmigem Querschnitt bestehenden Labyrinthabscheiders zur Rückführung von abgeschiedenen Feststoffen in den unteren Bereich des Reaktors, wobei die Balken sich geneigt entgegen der Rauchgasströmung öffnen, mit einer Brennstoffzufuhr, Fluidisierungsluftzufuhr und vorzugsweise einer gestuften Sekundärluftzufuhr im unteren Bereich und mindestens einem dem mindestens einen Labyrinthabscheider nachgeschalteten Staubabscheider.

Aus der WO 83/03294 ist ein Dampferzeuger mit zirkulierender Wirbelschicht bekannt, bei dem der Brennstoff in einen einbautenfreien und mit Wandkühlflächen versehenen Wirbelschichtreaktor eingeführt wird. Das feststoffbeladene Rauchgas verläßt unter Umlenkung um 90° den Wirbelschichtreaktor an dessen oberem Ende und tritt über einen horizontal angeordneten Rauchgaskanal in einen fallenden Rauchgaszug ein. Unter erneuter Umlenkung um im wesentlichen 90° tritt dann das Rauchgas in einen aufsteigenden Rauchgaszug ein, in dem konvektive Heizflächen angeordnet sind.

In dem Verbindungskanal und in dem fallenden Rauchgaszug ist jeweils ein nicht zentrifugaler mechanischer Abscheider in Form eines Labyrinthabscheiders angeordnet, wobei sich die Abscheideelemente im Verbindungskanal im wesentlichen vertikal und die Abscheideelemente im Rauchgaszug sich nach oben entgegen der Rauchgasströmung öffnend geneigt erstrecken und das von ihnen abgeschiedene Feststoffmaterial in einen zwischen dem Wirbelschichtreaktor und dem fallenden Zug angeordneten Speicherkammer abführen. Das untere Ende der Speicherkammer ist über mehrere sogenannte L-Ventile mit dem unteren Bereich des Wirbelschichtreaktors verbunden, so daß die in die Speicherkammer abgeschiedenen Feststoffe unter Zuhilfenahme einer dem L-Ventil zugeordneten Fluidisierungseinrichtung in den unteren Bereich des Wirbelschichtreaktors oberhalb des Düsenbodens des Wirbelschichtreaktors geregelt zugeführt werden können. Bei dem bekannten Dampferzeuger werden versetzt angeordnete Kanäle oder Gerinne verwendet, die sich im wesentlichen quer zur Rauchgasströmung erstrecken und sich entgegen der Rauchgasströmung im wesentlichen U-förmig öffnen.

Der Nachteil des bekannten Dampferzeugers ist darin zu sehen, daß für die als externe Rückführung (Rezirkulation) gestaltete Rückführung der außerhalb des Wirbelschichtreaktors liegende Speicherraum mit einem oder mehreren nachgeschalteten L-Ventilen erforderlich ist, d.h. es sind seperate Aschewege mit entsprechenden Förder- und Regeleinrichtungen erforderlich.

Aus der US-A-38 82 798 ist eine Müllverbrennungsanlage mit einer stationären Wirbelschicht bekannt. Um die Bildung großer Blasen und den damit verbundenen Austrag von feineren Bettbestandteilen, insbesondere Aluminiumflocken zu vermeiden, ist oberhalb der Bettoberfläche in nächster Nähe zu ihr ein Labyrintheinbau und oberhalb dieses Labyrintheinbaus ein weiterer Labyrintheinbau vorgesehen. Die Zwischenräume in den als Raumgitter ausgebildeten Labyrintheinbauten müssen mit feinen Teilchen aufgefüllt sein und auf der Oberseite der Labyrintheinbauten werden stationäre Wirbelschichten geringer Betttiefe aus Teilchen aufgebaut, die die Hohlräume der Labyrintheinbauten von unten nach oben durchwandert haben.

Diese Labyrintheinbauten sind für den Betrieb einer Wirbelschichtfeuerung mit Rezirkulation nicht geeignet, da die zu rezirkulierenden Teilchen die gesamten Labyrintheinbauten von unten nach oben durchwandern müssen.

Aus der DE-C 358 014 ist eine Vorrichtung zum Entstauben bekannt, bei der in einer erweiterten Kammer Reihen von hintereinander stehenden Platten winklig eingebaut sind. Die Platten bestimmen Teilgasströme, die sich erst bei Verlassen der Einbauten wieder vermischen können. Weiterhin sind die Platten so angeordnet, daß in der Erweiterung Toträume entstehen, die von der Gasströmung abgetrennt sind. An den Spitzen der winklig angeordneten Platten sind Abzugsrinnen angeordnet, die von dem Gasstrom überstrichen werden. Oberhalb der Abzugsrinnen bilden sich Abscheidungszonen aus, in die eine seitliche Ablenkung mit stark verringerter Geschwindigkeit erfolgt. Die Geschwindigkeit wird so verringert und die Breite der Abzugsrinnen so gewählt, daß sich leichtere Staubteilchen infolge ihrer Schwerkraft sich von oben nach unten bewegend in die Abzugsrinnen absetzen können. Die Abzugsrinnen werden unter einem solchen Winkel schräg gestellt, daß sofort nach Absetzen der festen Teilchen diese aus dem Gasstrom abgeschieden werden.

Schließlich ist aus der DE-C 493 677 ein Staub- und Flugaschefänger für Feuerungsanlagen bekannt, bei dem im Gasabzugskanal unter im wesentlichen vertikaler Ausrichtung gegeneinander gekrümmt ausgebildete Fangrinnen angeordnet sind. Die Fangrinnen sind mit ihrer konkaven Seite gegen den Gasstrom gerichtet und an ihren vertikal verlaufenden Rändern sind nach unten offene Feststoffleitrinnen röhrenartig nach innen umgebogen.

Es ist die Aufgabe der vorliegenden Erfindung, ausgehend von der WO 83/03294, eine Vorrichtung zur Verbrennung von kohlenstoffhaltigen Materialien der genannten Art anzugeben, bei dem ein Herausführen der Feststoffe aus dem Wirbelschichtreaktor nicht mehr erforderlich ist.

Diese Aufgabe wird dadurch gelöst, daß die sich nach unten öffnenden Abscheidebalken im oberen Bereich des Wirbelschichtreaktors im aufsteigenden Rauchgasstrom angeordnet sind und die abgeschiedenen Feststoffe auf die den Reaktionsraum des Wirbelschichtreaktors begrenzende Innenseite mindestens einer der Wandkühlflächen führen, an der die Feststoffe nach unten fließen, und daß an mindestens einem freien Schenkel der Abscheidebalken eine Feststoffleitrinne von im wesentlichen U-förmigem Querschnitt ausgebildet ist, die sich nach oben öffnet und der Abfuhr der von dem zugeordneten Abscheidebalken aufgefangenen Feststoffe dient.

Auf diese Weise wird eine einfache innere Rückführung der Feststoffe in dem Wirbelschichtreaktor selbst erreicht. Der Transport der von den gegenüber der Wandkühlfläche geneigten Abscheidebalken erfaßten Feststoffe zur Wandkühlfläche hin wird durch die Feststoffleitrinne gesichert.

Die Rückführung der abgeschiedenen Feststoffe kann ohne weiteren Schutz gegen die aufsteigenden Rauchgase auf einer als freie Wandkühlfläche ausgebildeten Wandkühlfläche erfolgen ; es ist jedoch auch möglich, daß an der Wandkühlfläche einer Vielzahl von sich von oben nach unten erstreckender Rückführkanäle vorgesehen ist. Die Rückführkanäle können zum Reaktorinneren hin geschlossen sein oder teilweise oder ganz geöffnet sein, wobei im letzten Fall nur stegartige Seitenwände verbleiben.

Die teilweise Öffnung kann durch eine längsgeschlitzte Außenwand oder durch eine mit linienartig angeordneten Durchbrechungen versehene Außenwand verwirklicht werden.

Vorzugsweise können auch die dem Reaktorinneren zugewandten Wände der Rückführkanäle gekühlt sein.

Weiterhin ist es zweckmäßig, daß die Rückführkanäle im unteren Bereich im Einwirkungsbereich der Sekundärluftzufuhr auslaufen, damit die eingetragenen Feststoffe sich mit dem übrigen Wirbelschichtmaterial gut vermischen, und ein entsprechender Temperaturausgleich auftritt, da die über die Wand zurückgeführten Feststoffe zuvor in entsprechender Weise abgekühlt worden sind.

Die Abscheidebalken können einen runden Querschnitt oder einen Querschnitt in Form eines Polygonalzuges aufweisen.

Während bei dem Dampferzeuger gemäß der WO 83/03294 die Elemente des Labyrinthabscheiders nicht gekühlt sind und somit an einem Ende unter Umständen nicht fest mit der Wandung des Wirbelschichtreaktors aus Wärmedehnungsgründen verbunden werden können, ist bei der vorliegenden Erfindung vorzugsweise vorgesehen, daß die Abscheidebalken gekühlt sind.

Auch kann es zweckmäßig sein, die Abscheidebalken aus mit einem Kühlmittel beaufschlagten Rohren in einer Rohr-Steg-Rohr-Konstruktion aufzubauen. Die Rohr-Steg-Rohr-Konstruktion kann zum verbesserten Wärmeund Verschleißschutz bestiftet und bestampft sein. Auch ist es möglich, die Abscheidebalken aus Guß herzustellen.

Die Abscheidebalken können sich – wie bei der WO 83/03294 – geneigt zur Rauchgasströmung gerade von einer Wand zur anderen erstrecken. Es ist jedoch auch möglich, daß sich die Balken dachartig zwischen zwei gegenüberliegenden Wandkühlflächen erstrecken.

Zur Kühlung der Abscheidebalken und/oder der dem Reaktorinneren zugewandten Wände der Rückführkanäle können diese in den Wasser-Dampf-Kreislauf eines Dampferzeugers eingeschaltet sein, wenn die Vorrichtung als Dampferzeuger betrieben wird.

Im Falle der Rückführkanäle ist es zweckmäßig, daß die Rückführkanäle durch senkrecht sich zu den Wandkühlflächen erstreckende Bleche gebildet sind, wobei vorzugsweise die Rohrteilung der Wandkühlfläche kleiner ist als die der Rückführkanalkühlfläche, da die Rohre der Rückführkanalkühlfläche im wesentlichen nur der Kühlung der Wände dient, und die Hauptwärme über die Wandheizflächen abgeführt wird.

Die Erfindung soll nun in verschiedenen Ausführungsformen anhand der beigefügten Figuren näher erläutert werden. Es zeigen :

Fig. 1 einen schematischen Längsschnitt durch einen Wirbelschichtreaktor längs der Linie I-I in Fig. 2,

Fig. 2 einen Horizontalschnitt längs der Linie II-II in Fig. 1,

Fig. 3 einen Teillängsschnitt durch den Wirbelschichtreaktor gemäß Fig. 1 in Blickrichtung der Pfeile III-III,

Fig. 4 einen Längsschnitt durch den Wirbelschichtreaktor durch Fig. 1 in Blickrichtung der Pfeile IV-IV,

Fig. 5 und 6 Querschnitte durch bevorzugte Ausführungsformen von Abscheidebalken und

Fig. 7 einen Längsschnitt vergleichbar Fig. 1, wobei keine gesonderten Rückführkanäle auf der Innenseite der Wandkühlflächen vorgesehen sind.

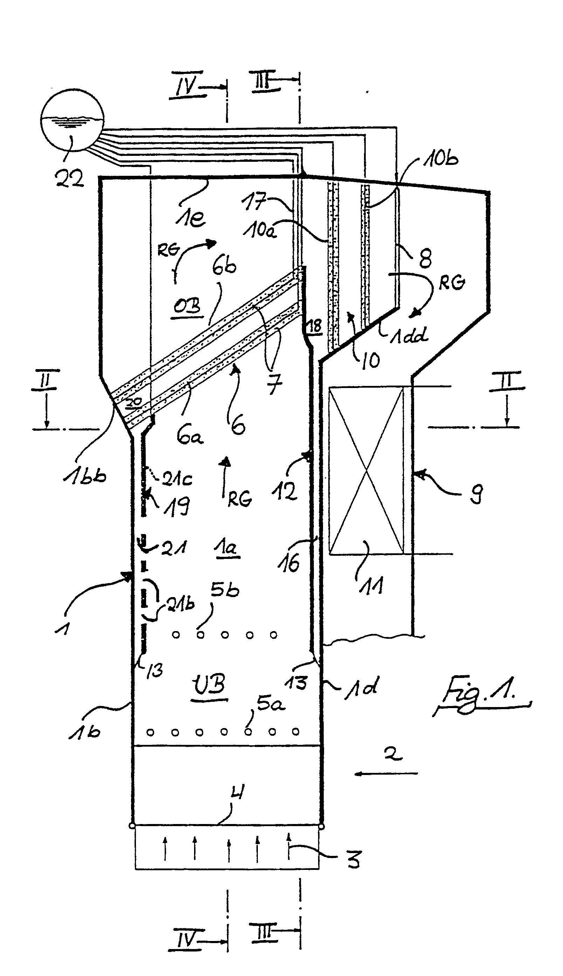

Wie aus den Figuren 1 bis 4 ersichtlich ist, weist der Wirbelschichtreaktor (1) von rechteckigem Querschnitt vier Wandkühlflächen (1a-1d) auf, die in Rohr-Steg-Rohr-Konstruktion ausgeführt sind.

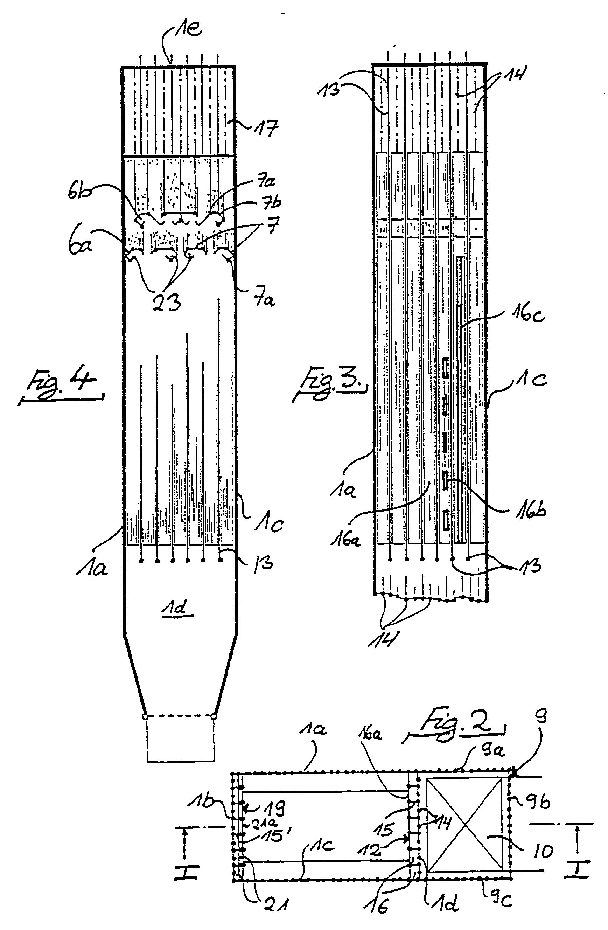

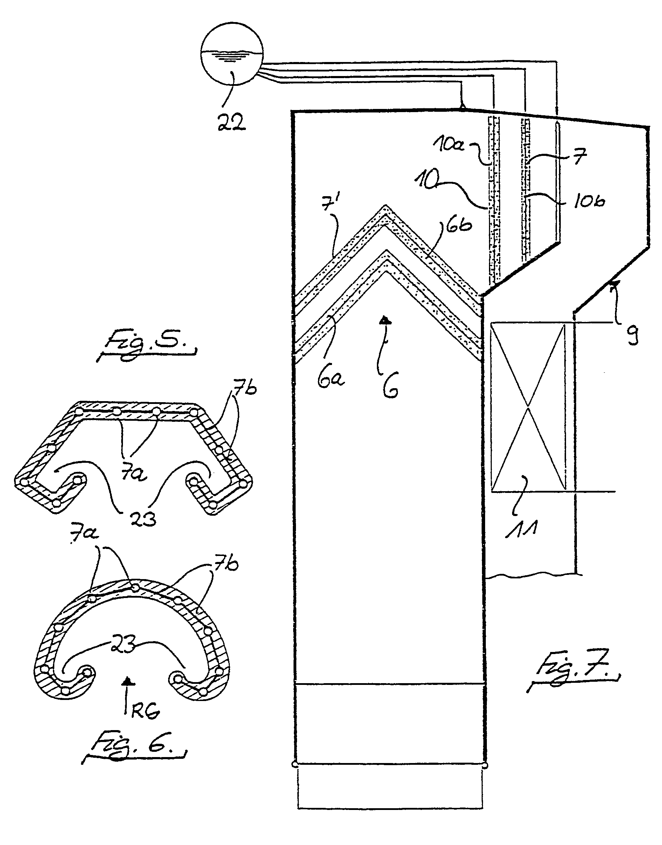

Im unteren Bereich (UB) des Wirbelschichtreaktors erfolgt die Zugabe von Brennstoff (2) oberhalb eines mit einem Fluidisierungsgas (3) beaufschlagten Düsenbodens (4), und oberhalb der Brennstoffzugabe (2) erfolgt die gestufte Zugabe von Sekundärluft (5a) und (5b), wobei ausgehend von dem Düsenboden (4) bis zur Sekundärluftzugabe (5a) eine aus der Fig. 4 ersichtliche Querschnittserweiterung vorgesehen ist.

Im oberen Bereich (OB) ist ein Labyrinthabscheider (6) in zwei versetzt angeordneten Lagen (6a) und (6b) von Abscheidebalken (7) angeordnet. Wie aus der Fig. 1 ersichtlich ist, erstrecken sich die Balken (7) schräg nach unten zur Wand (1b), die in dem Verbindungsbereich mit den Abscheidebalken (7) die aus der Fig. 1 ersichtliche Aufweitung (1bb) aufweist. Die Balken sind fest mit den Wänden verbunden.

Wie aus Figur 1 ersichtlich ist, erstreckt sich die Wand (1d) nicht bis zur Decke (1e) des Wirbelschichtreaktors, sondern läßt unter Abwinklung (1dd) nach außen einen Gasdurchtritt (8) in einen dem Wirbelschichtreaktor (1) nachgeschalteten fallenden Rauchgaszug (9) frei. Im übergangsbereich zwischen Wirbelschichtreaktor (1) und Rauchgaszug (9) ist ein weiterer Labyrinthabscheider (10) mit zwei Lagen (10a) und (10b) von Abscheidebalken (7) vorgesehen. Die Balken erstrecken sich im wesentlichen vertikal.

Wie aus der Fig. 2 ersichtlich ist, ist der Rauchgaszug (9) durch die Wandkühlfläche (1d) und weitere Wandkühlflächen (9a, 9c) begrenzt. In dem Rauchgaszug ist mindestens eine Berührungsheizfläche (11), z.B. ein Überhitzer angeordnet. Dem Rauchgaszug ist in nicht dargestellter Weise ein Staubabscheider nachgeschaltet.

Wie aus den Figuren 1, 2 und 3 ersichtlich ist, erstreckt sich mit Abstand von der Wandkühlfläche (1d) eine Rückführkanalkühlfläche (12) in Rohr-Steg-Rohr-Konstruktion, die eine größere Teilung als die Wandkühlfläche (1d) aufweist. Die Rohre (13) der Rückführungskanalkühlfläche (12) sind mit Rohren (14) der Wandkühlfläche (1d) verbunden. Durch sich zwischen den Kühlflächen (1d) und (12) erstreckende Bleche (15) werden einzelne Rückführkanäle (16) bestimmt.

Die Rückführkanäle (16) sind an ihrem unteren Ende offen, und die Wand (12) ist im Bereich des abgewinkelten Abschnittes (1dd) der Wandfläche (1d) so weit nach oben geführt, daß sie einerseits die Enden der Abscheidebalken (7) des Labyrinthabscheiders (6) trägt und andererseits einen Gasaustritt (17) aus dem Wirbelschichtreaktor in den Übergangsbereich und somit zum Gasaustritt (8) hin zuläßt. Zwischen der Wand (12) und dem Abschnitt (1dd) kommt es gleichzeitig zur Ausbildung eines Sammel- und Verteilungstrichters (18), aus dem die Rückführkanäle (76) den abgeschiedenen Feststoff dem unteren Bereich (UB) im Bereich der Sekundärluftzufuhr (5a) bzw. (5b) zuführen.

In vergleichbarer Weise ist der Wandkühlfläche (1b) eine Rückführkanalkühlfläche (79) zugeordnet, die zusammen mit dem nach außen abgewinkelten Bereich (1bb) einen Sammel- und Verteilungstrichter (20) und unter Zwischenschaltung von Blechen (15) Rückführkanäle (21) bestimmt.

Die dem Reaktorinneren zugewandten Flächen der Rückführkanäle (16) und (17) können geschlossen sein (16a, 21a), mit Durchbrechungen (16b, 21b) oder mit durchgehenden Längsschlitzen (16c) versehen sein ; sie können auch völlig offen sein, so daß nur seitliche Stegwände verbleiben. Diese Möglichkeiten sind schematisch in den Fig. 1 und 3 dargestellt, wobei selbstverständlich auch Mischformen an einer Reaktorwand möglich sind.

Wie aus den Figuren 4, 5 und 6 ersichtlich ist, sind die Abscheidebalken (7) ebenfalls in Rohr(7a)-Steg(7b)-Rohr(7a)-Konstruktion ausgeführt. Die Wandkühlflächen des Reaktors (1), des Rauchgaszuges (9), die Abscheider (7) und die Rückführkanalkühlflächen (12) und (19) sind in in einen Wasser-Dampf-Kreislauf eingebunden, wie dies in der Fig. 1 schematisch und unter Darstellung einer Trommel (22) und den entsprechenden Leitungsführungen dargestellt ist. Die zur Trommel führenden Leitungen erstrecken sich somit durch die Öffnungen (17) und (8) und durch den erweiterten Bereich im linken oberen Teil des Wirbelschichtreaktors (1) gemäß Fig. 1. Ihre Zahl kann der Anzahl der Rohre entsprechen oder nach Zusammenführung einzelner Rohre geringer sein. Die querangeströmten Leitungsabschnitte können zusatzlich geschützt sein.

Wie weiterhin aus den Figuren 4, 5 und 6 ersichtlich ist, weisen die Balkenabscheider (7) einen im wesentlichen U-förmige Querschnitt auf und öffnen sich entgegen der Rauchgasströmung (RG). An mindestens einem freien Schenkel ist eine U-förmige Feststoffführungsrinne (23) vorgesehen, die sich in Richtung der Rauchoasströmung öffnet und so zu einem verbesserten Abführen der von dem Abscheidebalken (7) aufgefangenen Feststoffe in die Trichter (18) bzw. (20) führt.

Während bei der Ausführungsform gemäß Fig. 1 die Rückführung der abgeschiedenen Feststoffe im Schutze der Rückführkanäle (16) bzw. (21) erfolgt, sind solche Rückführkanäle bei der Ausführungsform gemäß Fig. 7 nicht vorgesehen, sondern die abgeschiedenen Feststoffe fließen frei an den Wänden herunter ; es ist auch möglich, die Rückführkanäle bei der Ausführungsform gemäß Fig. 1 in Fortfall kommen zu lassen.

Weiterhin weist der erste Abscheider (6) dachartig ausgebildete Abscheidebalken (7') auf und führt somit Feststoff nicht nur einer Wand sondern zwei gegenüber liegenden Wänden (1b, 1d) zu.

Es ist selbstverständlich, daß auch bei der Verwendung von Rückführkanälen der erste Abscheider (6) so gestaltet sein kann, daß er zwei gegenüber liegenden Wänden Feststoffe zuführt.

**Ansprüche**

1. Vorrichtung zur Verbrennung von kohlenstoffhaltigen Materialien in einem Wirbelschichtreaktor mit einem unteren Bereich und einem oberen Bereich, mit Wandkühlflächen und mit einem Rückführsystem, einschließlich mindestens eines aus versetzt angeordnetem Abscheidebalken von im wesentlichen U-förmigem Querschnitt bestehenden Labyrinthabscheiders zur Rückführung von abgeschiedenen Feststoffen in den unteren Bereich des Reaktors, wobei die Balken sich geneigt entgegen der Rauchgasströmung öffnen, mit einer Brennstoffzufuhr, Fluidisierungsluftzufuhr und vorzugsweise einer gestuften Sekundärluftzufuhr im unteren Bereich und mindestens einem dem mindestens einen Labyrinthabscheider nachgeschalteten Staubabscheider, **dadurch gekennzeichnet,** daß die sich nach unten öffnenden Abscheidebalken (7) im oberen Bereich (OB) des Wirbelschichtreaktors (1) im aufsteigenden Rauchgasstrom angeordnet sind und die abgeschiedenen Feststoffe auf die den Reaktionsraum des Wirbelschichtreaktors (1) begrenzende Innenseite mindestens einer der Wandkühlflächen (1b) führen, an der die Feststoffe nach unten fließen, und daß an mindestens einem freien Schenkel der Abscheidebalken (7) eine Feststoffleitrinne (23) von im wesentlichen U-förmigem Querschnitt ausgebildet ist, die sich nach oben öffnet und der Abfuhr der von dem zugeordneten Abscheidebalken (7) aufgefangenen Feststoffe dient.

2. Vorrichtung nach Anspruch 1, **dadurch gekennzeichnet,** daß die Wandkühlfläche (1b) als freie Wandkühlfläche ausgebildet ist.

3. Vorrichtung nach Anspruch 1, **dadurch gekennzeichnet,** daß an der Wandkühlfläche (1b) eine Vielzahl von sich von oben nach unten erstreckenden Rückführkanälen (21) vorgesehen ist, die zum Reaktorinneren hin geschlossen, teilweise oder ganz geöffnet sind.

4. Vorrichtung nach Anspruch 3, **dadurch gekennzeichnet,** daß auch die dem Reaktorinneren zugewandten Wände (1d, 21a) der Rückführkanäle (21) gekühlt sind.

5. Vorrichtung nach Anspruch 3 oder 4 **dadurch gekennzeichnet,** daß die Rückführkanäle (21) im unteren Bereich im Einwirkungsbereich der Sekundärluftzufuhr (5a, 5b) auslaufen.

6. Vorrichtung nach einem der Ansprüche 1 bis 5, **dadurch gekennzeichnet,** daß die Abscheidebalken (7) einen runden Querschnitt (FIG. 6) oder einen Querschnitt (FIG. 5) in Form eines Polygonalzuges aufweisen.

7. Vorrichtung nach einem der Ansprüche 1 bis 6, **dadurch gekennzeichnet,** daß die Abscheidebalken (7) gekühlt sind.

8. Vorrichtung nach einem der Ansprüche 1 bis 7, **dadurch gekennzeichnet,** daß die Abscheidebalken (7) aus mit einem Kühlmittel beaufschlagten Rohren (7a) in einer Rohr(7a)-Steg(7b)-Rohr(7a)-Konstruktion aufgebaut sind.

9. Vorrichtung nach einem der Ansprüche 1 bis 8, **dadurch gekennzeichnet,** daß die Abscheidebalken (7) und/oder die dem Reaktorinneren zugewandten Wände der Rückführkanäle (16 ; 21) in den Wasser-Dampf-Kreislauf eines Dampferzeugers eingeschaltet sind.

10. Vorrichtung nach einem der Ansprüche 3 bis 9, **dadurch gekennzeichnet,** daß die Rückführkanäle (21) durch senkrecht sich zu den Wandkühlflächen (1b) erstreckende Bleche (15') gebildet sind.

11. Vorrichtung nach einem der Ansprüche 1 bis 10, **dadurch gekennzeichnet,** daß sich die Abscheidebalken (7') dachartig zwischen zwei gegenüberliegende Wandkühlflächen erstrecken.

## Claims

1. Device for burning carbonaceous matter in a fluidized bed reactor with a lower portion and and an upper portion with wall cooling surfaces and a return system including at least one labyrinth separator for the return of separated-off solid matter to said lower portion, which labyrinth separator is made up of staggered separation beams that have an essentially U-shaped cross-section, said beams are opening in an inclined manner toward the flue gas flow, with a fuel supply, fluidizing air supply and preferably with staged secondary air supply in said lower portion and at least one dust separator downstream the at least one labyrinth separator, characterized in that the downwardly opening separation beams are arranged in the upper portion (OB) of the fluidized bed reactor (1) in the rising flue gas stream and guide the separated-off solid matter to the inner side of at least one of the wall cooling surfaces (1b) defining the reaction space of the fluidized bed reactor (1), along which the solid matter flows downwardly, and in that on at least one free arm of the separation beams (7) a solid matter guide chute (23) of an essentially U-shaped cross-section is formed, which chute opens upwardly and serves for the removal of the solid matter collected by the associated separation beams (7).

2. The device according to claim 1, characterized in that the wall cooling surface (1b) is formed as a free cooling surface.

3. The device according to claim 1, characterized in that on the wall cooling surface (1b) a plurality of return passages (21) is provided extending from above to below, which return passages are toward the reactor interior closed, partially or completely open.

4. The device according to claim 3, characterized in that the walls (1d, 21a) of the return passages (21) facing towards the reactor interior are also cooled.

5. The device according to claim 3 or 4, characterized in that the return passages (21) terminate in the lower portion in the operational area of the secondary air supply (5a, 5b).

6. The device according to one of the claims 1 to 5, characterized in that the separation beams (7) have a round cross-section (FIG. 6) or a cross-section (FIG. 5) in the form of a polygonal line.

7. The device according to one of the claims 1 to 6, characterized in that the separation beams (7) are cooled.

8. The device according to one of the claims 1 to 7, characterized in that the separation beams (7) are made up of tubes (7a) in a tube(7a)-web(7b)-tube(7a)-construction, which tubes are supplied with a coolant.

9. The device according to one of the claims 1 to 8, characterized in that the separation beams (7) and/or the walls of the return passages (16 ; 21) facing the reactor interior are included in the water-steam-circuit of a steam generator.

10. The device according to one of the claims 3 to 9, characterized in that the return passages (21) are delimited by sheets (15′) extending perpendicularly to the wall cooling surfaces (1b).

11. The device according to one of the claims 1 to 10, characterized in that the separation beams (7′) are extending in a roof-shaped configuration between two opposite wall cooling surfaces.


**Revendications**

1. Dispositif pour assurer la combustion de matières carbonées dans un réacteur à fluidisation, comprenant une zone inférieure et une zone supérieure, des surfaces de refroidissement formant paroi et un ensemble de recyclage, y compris au moins un séparateur à labyrinthe qui est formé de poutrelles de séparation décalées ayant sensiblement la forme d'un U en coupe transversale et qui est destiné à recycler des matières solides séparées vers la zone inférieure du réacteur, les poutrelles s'ouvrant face au courant de gaz brûlés en étant inclinées par rapport à celui-ci, le dispositif comprenant encore une amenée de combustible, une amenée d'air de fluidisation et, de préférence, une amenée d'air secondaire réglable dans la zone inférieure et au moins un séparateur de poussière monté après le ou les séparateurs à labyrinthe,
caractérisé en ce que les poutrelles de séparation (7) s'ouvrant vers le bas sont disposées dans la zone supérieure (OB) du réacteur (1) à fluidisation, dans le courant ascendant de gaz brûlés et conduisent les matières solides séparées sur la face intérieure, délimitant la chambre de réaction du réacteur (1) à fluidisation, de l'une au moins des surfaces de refroidissement (1b) formant paroi, d'où les matières solides s'écoulent vers le bas, et en ce que, sur au moins une branche libre des poutrelles de séparation (7), il est réalisé une gouttière (23) de canalisation des matières solides, sensiblement en forme de U en coupe transversale, qui s'ouvre vers le haut et qui sert à évacuer les matières solides captées par les poutrelles de séparation (7) associées.

2. Dispositif selon la revendication 1, caractérisé en ce que les surfaces de refroidissement (1b) formant paroi sont réalisées sous forme de surfaces de refroidissement formant paroi libres.

3. Dispositif selon la revendication 1, caractérisé en ce que, sur la surface de refroidissement (1b) formant paroi, il est prévu une pluralité de canaux de recyclage (21) qui s'étendent de haut en bas et qui sont séparés de l'intérieur du réacteur ou ouverts en partie ou en totalité.

4. Dispositif selon la revendication 3, caractérisé en ce que les parois (1d, 21a), des canaux de recyclage (21), tournées vers l'intérieur du réacteur sont refroidies elles aussi.

5. Dispositif selon la revendication 3 ou 4, caractérisé en ce que les canaux de recyclage (21) se terminent dans la zone inférieure, dans le périmètre d'action de l'amenée (5a, 5b) d'air secondaire.

6. Dispositif selon l'une des revendications 1 à 5, caractérisé en ce que les poutrelles de séparation (7) ont, en coupe transversale, une forme arrondie (figure 6) ou la forme d'un prisme polygonal (figure 5).

7. Dispositif selon l'une des revendications 1 à 6, caractérisé en ce que les poutrelles de séparation (7) sont refroidies.

8. Dispositif selon l'une des revendications 1 à 7, caractérisé en ce que les poutrelles de séparation (7) sont fabriquées avec des tubes (7a) parcourus par un fluide de refroidissement, suivant une construction tube (7a) – âme (7b) – tube (7a).

9. Dispositif selon l'une des revendications 1 à 8, caractérisé en ce que les poutrelles de séparation (7) et/ou les parois, des canaux de recyclage (16 ; 21), tournées vers l'intérieur du réacteur sont intercalées dans le circuit de vapeur d'eau d'un générateur de vapeur.

10. Dispositif selon l'une des revendications 3 à 9, caractérisé en ce que les canaux de recyclage (21) sont formés par des tôles (15′) s'étendant transversalement aux surfaces de refroidissement (1b) formant paroi.

11. Dispositif selon l'une des revendications 1 à 10, caractérisé en ce que les poutrelles de séparation (7′) s'étendent à la manière de toits entre deux surfaces de refroidissement formant paroi opposées.

*Fig. 1.*

*1e*

*17*

*6b*
*7a*
*7b*
*7*
*6a*
*23*
*7a*

Fig. 4.

*1c*

*1a*

*13*

*1d*

*13*

*14*

Fig.3.

*16c*

*1c*

*1a*

*16a*

*16b*

*13*

*14*

Fig. 2.

*1a*    *16a*    *9*
*9a*
*1b*
*19*    *14*    *9b*
*21a*    *15*
*15'*    *1c*    *12*    *10*
*21*    *16*    *1d*    *9c*

22

7'

10a

10

66

7

10b

6a

6

9

11

_Fig.5._

7b

7a

23

7a

7b

23

RG

_Fig.6._

_Fig.7._